# EUROPEAN PATENT APPLICATION

(11) **EP 4 564 626 A1**
(43) Date of publication of application: **04.06.2025**
(21) Application number: 24306981.2
(22) Date of filing: 27.11.2024
(51) Int. Cl.: H02G 3/22, H02G 3/06, H02G 15/013, F16L 5/12

(54) **THREADING ASSEMBLY**

(30) Priority: 29.11.2023 CN 202323244547 U
(71) Applicant: SCHNEIDER ELECTRIC INDUSTRIES SAS, 92500 Rueil-Malmaison (FR)
(72) Inventor: NI, Junjie, Shanghai, 201203 (CN); MA, Feng, Shanghai, 201203 (CN); LI, Hu, Shanghai, 201203 (CN); JIN, Chen, Shanghai, 201203 (CN)
(74) Representative: Manitz Finsterwald Patent- und Rechtsanwaltspartnerschaft mbB

(57) **Abstract**

Embodiments of the present disclosure provide a threading assembly adapted to be provided on a rack, the threading assembly includes: a base portion provided with a mounting hole; and a replaceable portion detachably coupled to the mounting hole, the replaceable portion comprising a first threading part and a second threading part, the first threading part is provided with a first threading hole through which a first cable can penetrate, the second threading part is provided with a second threading hole through which a second cable can penetrate, a first gap extending in an axial direction of the second threading hole can be formed on a side of the second threading part away from the first threading part, so that the second cable can be plugged into the second threading hole via the first gap.

## Description

### FIELD

Embodiments of the present disclosure relate to a field of electrical equipment, and more particularly, to a threading assembly.

### BACKGROUND

In a wiring scenario of a charging post, a soft rubber seal is generally required to perform waterproof protection on a wire, and such the soft rubber seal is generally a rubber plug or a Glan header. However, a range of wire diameter which a rubber plug or a Glan header can meet is limited, and it cannot install cables of different types and different wire diameters while meeting sealing requirements of each cable.

In addition, a structure of a wire head of a network cable is special and is very inconvenient to be installed. A common rubber plug cannot meet a waterproof requirement of the network cable, therefore, most charging posts use the Grand head to install the network cable. However, the Grand head has a high cost, occupies a large space, and is not attractive. Therefore, the design needs to be optimized.

### SUMMARY

A purpose of the present disclosure is to provide a threading assembly to at least partially address the above problems.

According to a first aspect of the present disclosure, there is provided a threading assembly adapted to be disposed on a rack, the threading assembly includes: a base portion provided with a mounting hole; and a replaceable portion detachably coupled to the mounting hole, the replaceable portion including a first threading part and a second threading part, the first threading part is provided with a first threading hole through which a first cable can penetrate, the second threading part is provided with a second threading hole through which a second cable can penetrate, a first gap extending in an axial direction of the second threading hole can be formed on a side of the second threading part away from the first threading part, so that the second cable can be plugged into the second threading hole via the first gap.

In the threading assembly according to embodiments of the present disclosure, the replaceable portion can be detachably coupled to the mounting hole on the base portion, the replaceable portion includes the first threading part and the second threading part, wherein the first threading part is provided with the first threading hole through which the first cable can penetrate, the second threading part is provided with the second threading hole through which the second cable can penetrate, the first gap extending in the axial direction of the second threading hole can be formed on the side of the second threading part away from the first threading part, so that the second cable can be plugged into the second threading hole via the first gap, which greatly reduce an installation difficulty of the cable while ensuring a sealing performance of the cable, and cables of different diameters or different types can be installed on the same assembly, thereby saving a lot of installation space.

In some embodiments, a hole diameter of the first threading hole is greater than a hole diameter of the second threading hole. In such embodiments, the first threading hole may allow one or more larger diameter cables to penetrate through.

In some embodiments, the base portion includes a sealing portion and a supporting part, the sealing portion is coupled to the supporting portion, and the sealing portion includes a first inner portion, and a second inner portion is disposed at a position of the supporting portion corresponding to the first inner portion, and when the sealing portion is coupled to the supporting portion, the first inner portion and the second inner portion cooperate with each other to form the mounting hole. In such embodiments, the sealing portion can effectively prevent dust, water or the like that may exist from contacting the cable, greatly improving a safety performance of the cable.

In some embodiments, the supporting portion is provided with a plurality of third threading holes through which a third cable can penetrate. In such embodiments, each third threading hole may be provided to allow one cable to penetrate through, so as to separate different cables, thereby preventing cables from interfering with each other.

**In** some embodiments, a sealing boss is disposed at a position of the sealing portion corresponding to each third threading hole, each sealing boss protrudes towards a direction away from the supporting portion, and an inner space in communication with the third threading hole is formed at a side of each sealing boss facing the supporting portion. In such embodiments, the sealing boss can maintain sealing without the cable penetrating through the corresponding third threading hole.

**In** some embodiments, a removable blocking part is disposed on a side of each sealing boss away from the supporting portion, when the blocking part is removed from the corresponding sealing boss, a fourth threading hole can formed on a side of the sealing boss away from the supporting portion, the fourth threading hole is in communication with the inner space, so that a cable penetrating through the corresponding third threading hole can penetrate through the fourth threading hole. In such embodiments, the sealing bosses can tightly press against the cables when the cables penetrate through in the corresponding third threading holes and the fourth threading holes, so as to block dust, water and the like which may exist outside the cables.

In some embodiments, the supporting portion is provided with a plurality of clamping members which can cooperate with the rack. In such embodiments, the plurality of clamping members can reliably fix the supporting portion on the rack.

In some embodiments, the threading assembly further includes a blocking member, and the blocking member can be inserted into the second threading hole in the axial direction of the second threading hole. In such embodiments, the blocking member can reliably seal the inner space of the second threading hole when the second threading hole is not in use.

In some embodiments, a first limiting part and a second limiting part are respectively provided on two opposite sides of the replaceable portion in an axial direction of the first threading hole, the first limiting part and the second limiting part can limit the replaceable portion to a predetermined position relative to the base portion when the replaceable portion is coupled to the mounting hole. In such embodiments, the first limiting part and the second limiting part can reliably prevent the replaceable portion from moving relative to the base portion in the axial direction of the first wire hole, thereby improving the stability of the assembly.

In some embodiments, the replaceable portion is further provided with a sealing cover, the sealing cover is disposed on a side of the first threading part in an axial direction of the first threading hole, a second gap through which a cable can penetrate can be formed on the sealing cover. In such embodiments, the sealing cover can reliably seal a side of the first threading hole in the axial direction when there is not the cable penetrate through the first threading hole.

It should be understood that what is described in the Summary is not intended to limit key features or essential features of embodiments of the disclosure, nor is it intended to limit the scope of the present disclosure. Other features of the present disclosure will become readily understood from following description.

### BRIEF DESCRIPTION OF THE DRAWINGS

The above and other features, advantages, and aspects of various embodiments of the present disclosure will become more apparent with reference to following detailed description taken in conjunction with drawings. In the drawings, the same or similar reference signs denote the same or similar elements, wherein:
FIG. 1 illustrates an explosion schematic diagram of a threading assembly according to an embodiment of the present disclosure;
FIG. 2 illustrates an explosion schematic diagram of a base portion according to an embodiment of the present disclosure;
FIG. 3 illustrates a schematic structural diagram of a base portion according to an embodiment of the present disclosure;
FIG. 4 illustrates a partial structural schematic diagram of the base portion as shown in FIG. 3;
FIG. 5 illustrates an explosion schematic diagram of a threading assembly according to an embodiment of the present disclosure;
FIGS. 6 and 7 illustrate schematic diagrams of the replaceable portion as shown in FIG. 5;
FIG. 8 illustrates an explosion schematic diagram of a threading assembly according to another embodiment of the present disclosure;
FIGS. 9 and 10 illustrate schematic diagrams of the replaceable portion as shown in FIG. 8.

### DETAILED DESCRIPTION

Preferred embodiments of the present disclosure will be described in more detail below with reference to the drawings. Although the preferred embodiments of the present disclosure are shown in the drawings, it should be understood that the present disclosure may be implemented in various forms and should not be limited to the embodiments set forth herein. Rather, these embodiments are provided so that the present disclosure will be thorough and complete, and will fully convey a scope of the present disclosure to those skilled in the art.

The term "including" and variations thereof, as used herein, mean open-ended including, that is, "including but not limited to". Unless specifically stated otherwise, the term "or" means "and/or. ". The term "based on" means "based at least in part on". The term "another embodiment" means "at least one further embodiment. " The terms "first, " "second, " and the like may refer to different or identical objects.

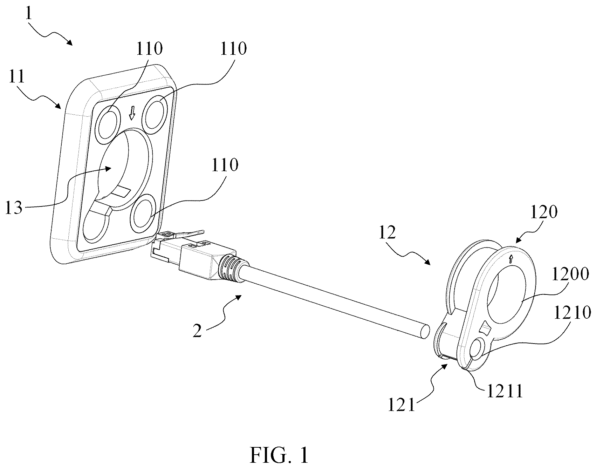

As described above, the rubber plug or the Glan header cannot install cables of different types and different diameters while meeting the sealing requirements of each cable. In addition, the structure of a wire head of a network cable is special and is very inconvenient to be installed. A common rubber plug cannot meet a waterproof requirement of the network cable, therefore, most charging posts use a Grand head to install the network cable. However, the Grand head has a high cost, occupies a large space, and is not attractive. Therefore, the design needs to be optimized. Embodiments of the present disclosure provide a threading assembly, in this scheme, a replaceable portion can be detachably coupled to a mounting hole on a base portion, the replaceable portion includes a first threading part and a second threading part, wherein the first threading part is provided with a first threading hole through which the first cable can penetrate, the second threading part is provided with a second threading hole through which a second cable can penetrate, a first gap extending in an axial direction of the second threading hole can be formed on a side of the second threading part away from the first threading part, so that the second cable can be plugged into the second threading hole via the first gap. In this way, an installation difficulty of the cable is greatly reduced while ensuring a sealing performance of the cable, and cables of different diameters or different types can be simultaneously installed on the same assembly, thereby saving a lot of installation space. Hereinafter, the principle of the present disclosure will be described with reference to FIGS. 1 to 10.

FIG 1 illustrates an explosion schematic diagram of a threading assembly 1 according to an embodiment of the present disclosure. As shown in FIG. 1, the threading assembly 1 described herein generally includes a base portion 11 and a replaceable portion 12. The base portion 11 is provided with a mounting hole 13. The replaceable portion 12 is detachably coupled to the mounting hole 13. The threading assembly 1 is adapted to be provided at a place where wiring is required such as a rack of a charging post.

In an embodiment, replaceable portion 12 may include a first threading part 120 and a second threading part 121. The first threading part 120 is provided with a first threading hole 1200 through which the first cable can penetrate, the second threading part 121 is provided with a second threading hole 1210 through which the second cable can penetrate. A first gap 1211 extending in the axial direction of the second threading hole 1210 can be formed on a side of the second threading part 121 away from the first threading part 120, so that the second cable can be plugged into the second threading hole 1210 via the first gap 1211. The first cable and the second cable may be cables of the same type, and may also be cables of different types. The type and diameter of the first and second cables will depend on actual needs of operation.

In an embodiment, as shown in FIG. 1, a hole diameter of the first threading hole 1200 may be greater than a hole diameter of the second threading hole 1210. The first threading hole 1200 having a larger diameter can be used for the first cable having a large diameter to penetrate through, and can also be used for a first cable formed by combining a plurality of cables having a small diameter to penetrate through. In an embodiment, the first cable may be a power cord.

In an embodiment, the replaceable portion 12 is made of a deformable material, for example, silica gel, and the side of the second threading part 121 away from the first threading part 120 may be cut away in an axial direction of the second threading hole 1210, so as to form a first gap 1211 for the second cable to be plugged. The second cable may be a cable having a special cable head configuration that is not directly perforate-mounted, such as a network cable 2 with a crystal head as shown in FIG. 1. After the second cable is plugged into the second threading hole 1210 from the first gap 1211, the replaceable portion 12 is inserted into the mounting hole 13 to complete the installation. It should be understood that other types of replaceable portions 12 may be envisioned by those of ordinary skill in the art to implement the above function based on the teachings provided in the present disclosure, and all such implementations fall within the scope of the present disclosure.

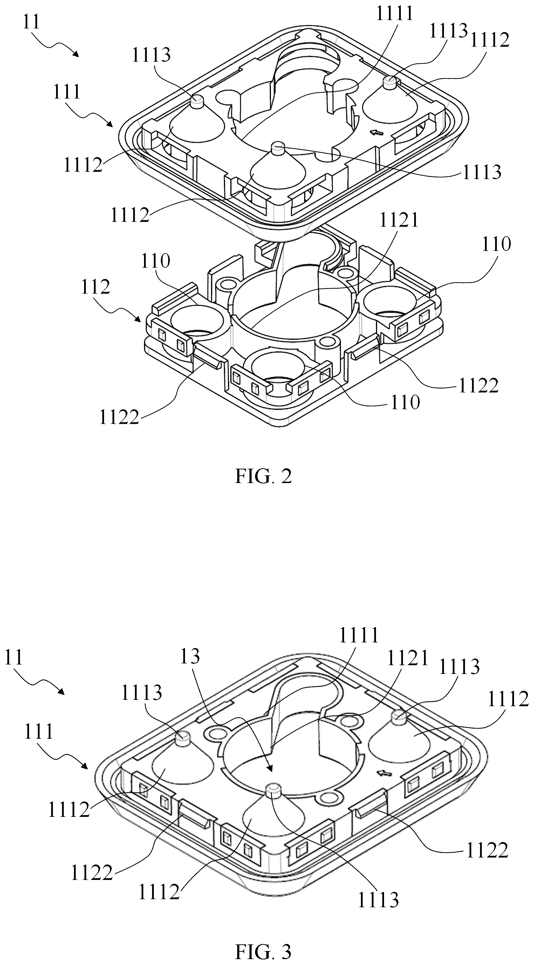

FIG. 2 illustrates an explosion schematic diagram of base portion 11, according to an embodiment of the present disclosure. In an embodiment, as shown in FIG. 2, the base portion 11 may include a sealing portion 111 and a supporting portion 112. The sealing portion 111 is coupled to the supporting portion 112. In an embodiment, the sealing portion 111 is made of a deformable waterproof material, such as silica gel, rubber, or the like. The supporting portion 112 is made of an insulating material having a certain hardness, such as polycarbonate (PC). The sealing portion 111 and the supporting portion 112 can be manufactured by means of integral molding of a die, thereby improving an industrialized production efficiency to a certain extent.

FIG. 3 illustrates a schematic structural diagram of a base portion 11 according to an embodiment of the present disclosure. In an embodiment, as shown in FIGS. 2 and 3, a sealing portion 111 includes a first inner portion 1111. A second inner portion 1121 is disposed at a position of the supporting portion 112 corresponding to the first inner portion 1111. When the sealing portion 111 is coupled to the supporting portion 112, the first inner portion 1111 and the second inner portion 1121 cooperate with each other to form the mounting hole 13.

With continued reference to FIGS. 1-3, the supporting portion 112 is provided with a plurality of third threading holes 110 through which a third cable can penetrate. Each third threading hole 110 can be used for a third cable to penetrate through, so as to separate different cables, thereby preventing cables from interfering with each other. In an embodiment, the third cable may be a signal line.

In an embodiment, as shown in FIG. 2 and 3, a sealing boss 1112 is disposed at a position of the sealing portion 111 corresponding to each third threading hole 110, each sealing boss 1112 protrudes towards a direction away from the supporting portion 112, and an inner space in communication with the third threading hole 110 is formed at a side of each sealing boss 1112 facing the supporting portion 112,. Each sealing boss 1112 can maintain sealing when there is not the cable penetrate through the corresponding third threading hole 110.

In an embodiment, as shown in FIGS. 2 and 3, the number of third threading holes 110 and the number of sealing bosses 1112 may be three. In other embodiments, the number of third threading holes 110 and sealing bosses 1112 may be more or less, such as one, two, etc., all of which fall within the scope of the present disclosure.

With continued reference to FIGS. 2 and 3, a removable blocking part 1113 is disposed on a side of each sealing boss 1112 away from the supporting portion 112. Each blocking part 1113 is connected to the corresponding sealing boss 1112 in a sealing manner, thereby further ensuring the sealing performance of the sealing portion 111.

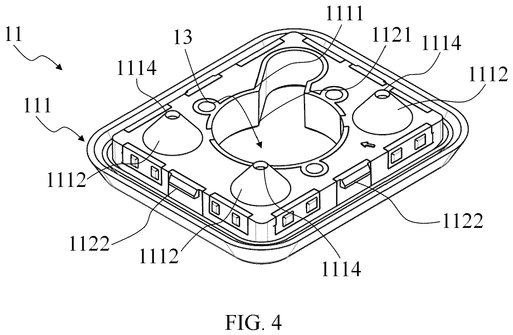

FIG. 4 illustrates a partial structural schematic diagram of the base portion 11 as shown in FIG. 3. In an embodiment, as shown in FIG. 4, when the blocking part 1113 is removed from the corresponding sealing boss 1112, a fourth threading hole 1114 can be formed on a side of the sealing boss 1112 away from the supporting portion 112. The fourth threading hole 1114 is in communication with the inner space, so that a cable penetrating through the corresponding third threading hole 110 can penetrate through the fourth threading hole. The hole diameter of the fourth threading hole 1114 is smaller than the hole diameter of the corresponding third threading hole 110, so that the sealing boss 1112 can tightly press against the cable when the cable penetrates through the third threading hole 110 and the fourth threading hole 1114, thereby blocking dust, water, and the like which may exist outside the cable, and greatly improving the safety performance of the wiring. It should be understood that, based on the teachings provided in the present disclosure, other types of sealing bosses 1112 and blocking parts 1113 may be envisioned by those of ordinary skill in the art to implement the above function, and all such implementations fall within the scope of the present disclosure.

In an embodiment, as shown in FIGS. 2 to 4, the supporting portion 112 is provided with a plurality of clamping members 1122 which can cooperate with the rack. The plurality of clamping members 1122 can reliably fix the supporting portion 112 on a rack of a device requiring wiring such as the charging post. A snap-fitting groove (not shown in the drawings) can be fitted with the clamping member 1122 is provided at a position on the rack corresponding to each clamping member 1122. It should be understood that, based on the teachings provided in the present disclosure, other types of components that secure supporting portion 112 to the chassis may be envisioned by those of ordinary skill in the art to implement the above function, and all such implementations fall within the scope of the present disclosure.

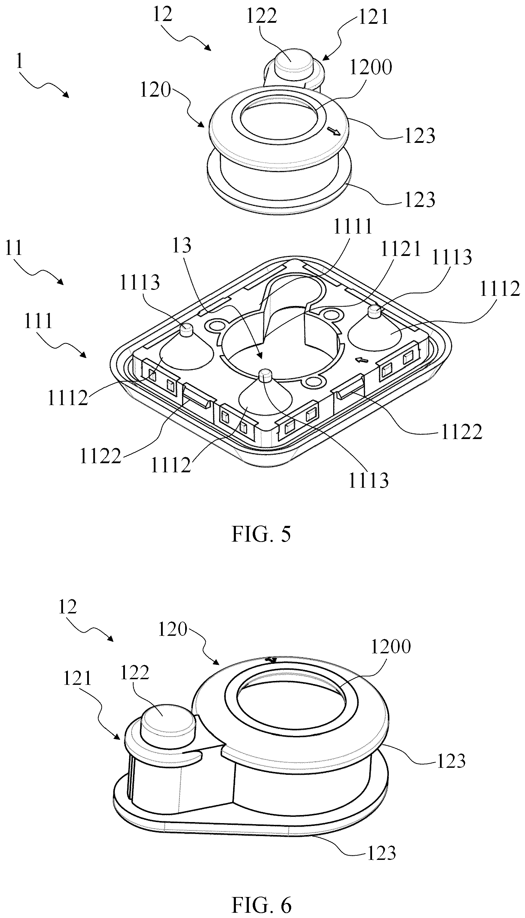

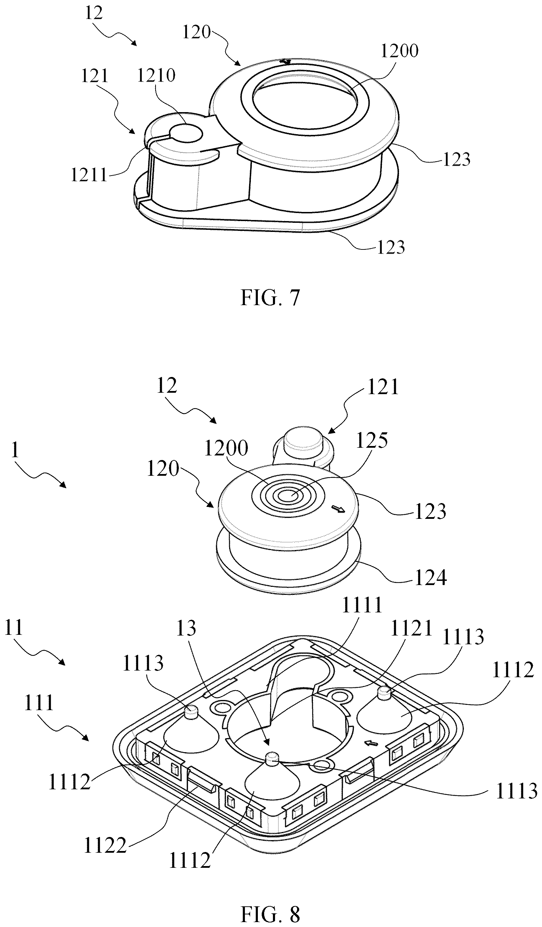

FIG. 5 illustrates an explosion schematic diagram of the threading assembly 1 according to an embodiment of the present disclosure; FIGS. 6 and 7 illustrate a structural schematic diagram of the replaceable portion 12 as shown in FIG. 5. In an embodiment, as shown in FIGS. 5 and 6, the threading assembly 1 can further include a blocking member 122. The blocking member 122 can be inserted into the second threading hole 1210 in the axial direction of the second threading hole 1210. The blocking member 122 can reliably seal the inner space of the second threading hole 1210 when the second threading hole 1210 is not in use. When the second threading hole 1210 needs to be used, the blocking member 122 may be removed in the direction of the axis of the second threading hole 1210. In an embodiment, as shown in FIGS. 6 and 7, when the blocking member 122 is removed from the second threading hole 1210, a side of the second threading part 121 away from the first threading part 120 may be cut away in the axial direction of the second threading hole 1210, so as to form the first gap 1211 for the second cable to be plugged. It should be understood that, based on the teachings provided in the present disclosure, other types of blocking members 122 may be envisioned by those of ordinary skill in the art to implement the above function, and all such implementations fall within the scope of the present disclosure.

In an embodiment, as shown in FIGS. 5-7, a first limiting part 123 and a second limiting part 124 are respectively provided on two opposite sides of the replaceable portion 12 in an axial direction of the first wire hole 1200. The first limiting part 123 and the second limiting part 124 can limit the replaceable portion 12 to a predetermined position with respect to the base portion 11 in the case where the replaceable portion 12 is coupled to the mounting hole 13. The first limiting part 123 and the second limiting part 124 are slightly larger than the mounting hole 13. The first limiting part 123 and the second limiting part 124 can be deformed when the replaceable portion 12 is inserted into the mounting hole 13, The first limiting part 123 and the second limiting part 124 can restore initial shape and press against an end face of the base portion 11 in the axis direction of the mounting hole 13 when the replaceable portion 12 is inserted into the mounting hole 13, so that the replaceable portion 12 can be fixed at a predetermined position. It should be understood that, based on the teachings provided in the present disclosure, other types of the first limiting part 123 and the second limiting part 124 may be envisioned by those of ordinary skill in the art to implement the above function, and envisioned by implementations fall within the scope of the present disclosure.

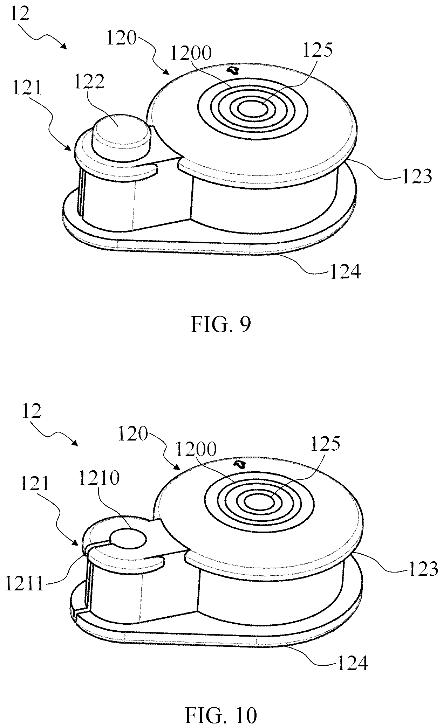

FIG. 8 illustrates an explosion schematic diagram of the threading assembly 1 according to another embodiment of the present disclosure, and FIGS. 9 and 10 illustrate a schematic diagram of the replaceable portion 12 shown in FIG. 8. The threading assembly 1 shown in FIGS. 8 to 10 and the threading assembly 1 described in conjunction with FIGS. 5 to 7 merely have different structural forms of the replaceable portion 12. Only the differences between the two will be described below, and the same parts will not be repeated.

In an embodiment, as shown in FIGS. 5 to 7, the replaceable portion 12 is provided with a sealing cover 125. The sealing cover 125 is disposed on a side of the first threading part 120 in an axial direction of the first threading hole 1200. The sealing cover 125 can form a second gap (not shown in the drawings) through which the cable can penetrate. The sealing cover 125 can reliably seal a side in the axial direction of the first threading hole 1200 when the first threading hole 1200 is not in use. When desired for use in the first threading hole diameter 1200, the sealing cap 125 may be cut to form the second gap for the cable to penetrate through. The size of the second gap is slightly smaller than the size of the cable penetrating through, so that when the cable penetrates through the second gap, the sealing cover 125 can tightly press against the cable so as to block dust, water and the like which may exist outside the cable, thereby greatly improving the safety performance of the wiring.

The design of the threading assembly 1 according to embodiments of the present disclosure takes practical application into consideration, and meets a requirement that a plurality of cables of different types or different diameters need to be installed in a centralized manner in a limited space. In addition, the threading assembly 1 according to embodiments of the present disclosure has a simple structure, a low cost, is easy to process, and is easy to install, and can also ensure that different cables are isolated from each other and have a good sealing performance.

Having described embodiments of the disclosure above, the foregoing description is exemplary, not exhaustive, and is not limited to embodiments disclosed. Many modifications and variations will be apparent to those of ordinary skill in the art without departing from scope and spirit of illustrated embodiments. The choice of terms used herein is intended to best explain the principles of embodiments, practical application or technological improvements in marketplace, or so that others of ordinary skill in the art to understand the embodiments disclosed herein.

## Claims

1. A threading assembly (1) adapted to be disposed on a rack, **characterized in that** the threading assembly (1) comprises:
a base portion (11) provided with a mounting hole (13); and
a replaceable portion (12) detachably coupled to the mounting hole (13), the replaceable portion (12) comprising a first threading part (120) and a second threading part (121), the first threading part (120) is provided with a first threading hole (1200) through which a first cable can penetrate, the second threading part (121) is provided with a second threading hole (1210) through which a second cable can penetrate, a first gap (1211) extending in an axial direction of the second threading hole (1210) can be formed on a side of the second threading part (121) away from the first threading part (120), so that the second cable can be plugged into the second threading hole (1210) via the first gap (1211).

2. The threading assembly (1) of claim 1, **characterized in that** a hole diameter of the first threading hole (1200) is greater than a hole diameter of the second threading hole (1210).

3. The threading assembly (1) of claim 1, **characterized in that** the base portion (11) comprises a sealing portion (111) and a supporting portion (112), the sealing portion (111) is coupled to the supporting portion (112), and the sealing portion (111) comprises a first inner portion (1111), a second inner portion (1121) is disposed at a position of the supporting portion (112) corresponding to the first inner portion (1111), and when the sealing portion (111) is coupled to the supporting portion (112), the first inner portion (1111) and the second inner portion (1121) cooperate with each other to form the mounting hole (13).

4. The threading assembly (1) of claim 3, **characterized in that** the supporting portion (112) is provided with a plurality of third threading holes (110) through which a third cable can penetrate.

5. The threading assembly (1) of claim 4, **characterized in that** a sealing boss (1112) is disposed at a position of the sealing portion (111) corresponding to each third threading hole (110), each sealing boss (1112) protrudes towards a direction away from the supporting portion (112), and an inner space in communication with the third threading hole (110) is formed at a side of each sealing boss (1112) facing the supporting portion (112).

6. The threading assembly (1) of claim 5, **characterized in that** a removable blocking part (1113) is disposed on a side of each sealing boss (1112) away from the supporting portion (112), when the blocking part (1113) is removed from the corresponding sealing boss (1112), a fourth threading hole (1114) can be formed on a side of the sealing boss (1112) away from the supporting portion (112), the fourth threading hole (1114) is in communication with the inner space, so that a cable penetrating through the corresponding third threading hole (110) can penetrate through the fourth threading hole (1114).

7. The threading assembly (1) of claim 3, **characterized in that** the supporting portion (112) is provided with a plurality of clamping members (1122) which can cooperate with the rack.

8. The threading assembly (1) of claim 1, **characterized in that** the threading assembly (1) further comprises a blocking member (122), and the blocking member (122) can be inserted into the second threading hole (1210) in the axial direction of the second threading hole (1210).

9. The threading assembly (1) of claim 1, **characterized in that** a first limiting part (123) and a second limiting part (124) are respectively provided on two opposite sides of the replaceable portion (12) in an axial direction of the first threading hole (1200), the first limiting part (123) and the second limiting part (124) can limit the replaceable portion (12) to a predetermined position relative to the base portion (11) when the replaceable portion (12) is coupled to the mounting hole (13).

10. The threading assembly (1) of claim 1, **characterized in that** the replaceable portion (12) is further provided with a sealing cover (125), the sealing cover (125) is disposed on a side of the first threading part (120) in an axial direction of the first threading hole (1200), a second gap through which a cable can penetrate can be formed on the sealing cover (125).
